# EUROPÄISCHE PATENTSCHRIFT

(11) **EP 0 794 376 B1**
(45) Veröffentlichungstag und Bekanntmachung des Hinweises auf die Patenterteilung: **13.09.2006**
(21) Anmeldenummer: 97890028.0
(22) Anmeldetag: 18.02.1997
(51) Int. Cl.: F16L 9/147, B32B 15/08

(54) **Verbundrohr, dessen Mantel eine Kupfer-Mittelschicht aus Kupfer und je eine haftvermittlerschicht und eine innere und äussere Deckschicht aufweist**
Composite tube comprising a sleeve with a copper-intermediate layer and an inner and outer skin layer
Tuyau composite comprenant une gaine avec une couche intermédiaire en cuivre et une couche de couverture interne et externe

(30) Priorität: 05.03.1996 AT 40996
(43) Veröffentlichungstag der Anmeldung: 10.09.1997
(73) Patentinhaber: KE-KELIT Kunststoffwerk Gesellschaft m.b.H., A-4017 Linz (AT)
(72) Erfinder: Egger, Karl, 4020 Linz (AT)
(74) Vertreter: Hübscher, Helmut

(56) Entgegenhaltungen:
- EP-A- 0 111 169
- EP-A- 0 154 931
- EP-A- 0 702 056
- DE-A- 4 018 753
- DE-A- 4 304 717
- DE-A- 4 404 492
- DE-C- 4 400 811
- GB-A- 2 091 168
- ENGINEERING. (INCL. MACHINE SHOP MAGAZINE), Bd. 230, Nr. 1, 1.Januar 1990, Seite 8 XP000093252 "STRONG BUT FLEXIBLE CORROSION-PROOF PIPING"

## Beschreibung

Die Erfindung betrifft ein Verbundrohr, dessen Mantel eine Mittelschicht aus Kupfer und je eine Haftvermittlerschicht und eine innere und äußere Deckschicht aufweist.

Es soll sich um eine dünnwandige Rohrkonstruktion handeln, die sich durch große Druckbeständigkeit, Heißwasserfestigkeit und möglichst Sauerstoffdiffusionsdichtheit auszeichnet, wobei solche Rohre in der Sanitär- und Heizungsverrohrung gebraucht und eingesetzt werden.

Beidseitige Haftvermittlerschichten aus Polymeren bei einer Mittelschicht aus Aluminium bilden eine spezifische Adhäsion zur Metalloberfläche, die also Carboxyl-, Hydro-xyl- und Amidgruppen enthalten. Gegebenenfalls können geeignete Zusätze aus Silizium,- Zirkon oder Titanorganischen Verbindungen für eine organisch-anorganische Bindung sorgen. Diese Haftvermittlerschichten müssen anderseits aus Polymeren bestehen, die mit den jeweiligen Deckschichten eines Rohres eine feste kraftschlüssige Verbindung eingehen. Üblicherweise handelt es sich dabei aus gleichen oder unterschiedlich aufgebauten vernetzten oder unvernetzten Polyolefinen, insbesondere Polyäthylen, -propylen und -buten.

Zur Erzielung der notwendigen Festigkeiten werden die Deckschichten aus vernetztem Werkstoff aufgebaut, bei dem jedoch meist keine Möglichkeit einer Verschweißung bzw. Verklebung der Rohrenden miteinander bzw. mit irgendwelZur Erzielung der notwendigen Festigkeiten werden die Deckschichten aus vernetztem Werkstoff aufgebaut, bei dem jedoch meist keine Möglichkeit einer Verschweißung bzw. Verklebung der Rohrenden miteinander bzw. mit irgendwelchen Formteilen besteht, so daß lediglich eine mechanische Klemmverbindung, z.B. eine Schneidringverschraubung, eine Preßverbindung mit Stützhülse usw. verwendbar ist. Bei all diesen Verbindungsarten muß jedoch sichergestellt sein, daß kein heißes Mediumwasser in die Mittelschicht aus Aluminium vordringen kann, da in einem solchen Fall Aluminium in dieser Mittelschicht vom Heißwasser gemäß der Gleichung

Al + 3 H₂O = Al (OH)₃ + 3 H

aufgelöst wird. Sowohl das entstehende Aluminiumhydroxid als auch der gebildete Wasserstoff führen dann in rascher Folge zur Zerstörung des Gefüges und damit zu Undichtheiten mit häufig großem Sachschaden. Es ist vielfach versucht worden, die Aluminiummittelschicht durch ein anderes Metall zu ersetzen, wobei sich hinsichtlich der Elastizität, Dehnbarkeit, Heißwasserbeständigkeit aber auch der praktischen Verfügbarkeit und des Preises Kupfer anbietet.

Es ist bereits bekannt und bereitet auch keine Schwierigkeiten, Metallverbundrohre mit einer Mittelschicht aus Kupfer bei einer Schichtstärke von 0,08 bis 0,15 mm herzustellen. DE 4304 717 offenbart einsolches Kupfer-Kunststoff Verbundrohr Solche Rohre weisen auch durch die guten Kupfereigenschaften hervorragende Kurzzeitgebrauchswerte auf, doch besteht die Schwierigkeit, die katalysierende Wirkung von Kupferionen an den anliegenden Polymerschichten (Deckschichten) zu inhibieren, da bekanntlich Kupferionen, insbesondere an tertiär gebundenen C-Atomen, wie sie bevorzugt in den Deck- bzw. Haftvermittlerschichten aus Polypropylen, Polybuten und vernetzten PE-Strukturen auftreten, als Auslöser von Kettenbrüchen und damit Abbauaktivatoren des Polymergerüstes wirken. Dies zeigt sich mittelfristig im Gebrauch in Form der Auflösung des Verbundes, also der Schichtentrennung und damit einer Zerstörung des Werkstoffes bis zur absoluten Gebrauchsuntauglichkeit. Es ist zwar versucht worden, die Haftvermittlerschichten und/oder die Deckschichten mit an sich bekannten Schwermetalldesaktivatoren zu versetzen, um diese Effekte wirksam einzudämmen oder zu verhindern. Im Dauergebrauch (Heißwasser bis 90 °C, Druck bis 10 bar) hat sich jedoch gezeigt, daß eine merkbare Wasserdampfdiffusion bis zur Kupferschicht und damit die Bildung von Kupferionen nicht zu vermeiden ist. Eine Kupfermittelschicht hätte aber gegenüber Aluminium technisch nutzbare bzw. wertvolle Vorteile, und zwar größere Heißwasserbeständigkeit, eine viermal so hohe Reißdehnung wie bei Aluminium, eine dreimal so hohe Zugfestigkeit gegenüber dieem Werkstoff, einen E-Modul, der um ca 50 % höhere liegt als bei Aluminium, eine um etwa 30 % geringere Längsdehnung als Aluminium und schließlich die Verhinderung von elektrolytischen Potentialen mit damit verbundenem Metallabbau bei Verwendung von Aluminium mit üblicherweise aus Messing bestehenden Armaturen, wogegen Kupfer und Messing eine praktisch potentialfreie Kombination darstellen. Es handelt sich also insgesamt bei der Verwendung von Kupfer als Mittelschicht um Verbundrohre mit wesentlich höheren Festigkeiten bei vergleichsweise dünneren Metallschichten und damit erhöhter Flexibilität, die aber dennoch Nachteile aufweist.

Die Erfindung hat sich die Aufgabe gestellt, die angeführten Nachteile zu beseitigen und ein Verbundrohr der eingangs geschilderten Art zu schaffen, das die Vorteile der Kupfermittelschicht mit sich bringt, ohne die bisher damit verbundenen Mängel zu besitzen.

Die Erfindung löst die gestellte Aufgabe dadurch, daß die aus Kupfer bestehende Mittelschicht innen und außen mit einem anorganischen, die lonenbildung bzw. -wanderung verhindernden Belag versehen ist, auf dem erst die Haftvermittlungsschichten und die Deckschichten angeordnet sind.

Die Kupfermittelschicht zeigt also vor dem Einbau in die Polymerschichten noch einen Belag in einer Schichtstärke von etwa 1 bis 15 µm, wobei dieser Belag die schädliche lonenbildung bzw. -wanderung verhindert. Der Belag kann einfach galvanisch aufgebracht werden, es ist aber auch möglich, ihn duch Tauchen auf die Kupfermittelschicht zu erbringen. Der Belag kann aus Fe, Co, Ni, Cd, Zn, Cr, Ag, Ti, Sn oder Pb bestehen, vorzuziehen ist aber Nickel. Eine weitere Möglichkeit für den Belag besteht in der Verwendung von Oxiden der Metalle Ti und Zr insitu gebildet durch thermische Behandlung von Titan- oder Zirkonorganischen Schichten an Kupfer. Für die Deckschichten eignen sich lineare oder verzweigte Polyolefine, wie Polyäthylen, Polypropylen, Polybuten, vorzugsweise vernetzte Polyolefine.

### Beispiel 1:

Eine Kupferfolie mit einer Stärke von 0,1 mm wird in einer Breite von 50 mm zu Bändern geschnitten und in bekannter Weise in einem Galvanikbad mit einer reinen Nickelschicht von ca 3 µm überzogen. Das so vernickelte Kupferband wird dann in bekannter Weise zu einem Metallverbundrohr verarbeitet, das einen Außendurchmesser von 16 mm und eine Gesamtwandstärke von 2 mm aufweist. Dabei werden ein Haftvermittler aus gepfropftem Polyäthylen und Deckschichten aus silanvernetztem Polyäthylen mit einem Vernetzungsgrad von über 65 % verwendet.

Das entstandene Rohr weist alle Eigenschaften eines Metallverbundrohres, wie es in der Heizungsinstallation benötigt wird (Berstdruck > 80 bar bei 20 ° C) auf und zeigt im Gegensatz zu Rohren mit Kupfer ohne Deckschichten nach 5000 Zyklen von je 15 min bei 95 °C, 15 min bei 20 °C und 10 bar Dauerdruck (das sind 2500 Stunden) keinerlei erkennbare Beeinträchtigungen des Schichtaufbaues.

### Beispiel 2:

Ein 50 mm breites Kupferband in einer Schichtstärke von 0,12 mm wird allseits durch eine Lösung geführt, die 50 % eines Dihydrogen bis (ditridecyl)phosphit-adduktes an Titan (IV)-tetrakis [2,2 - bis (2-propenyloxy) methyl] 1-butanolates enthält. Nach einer Trockenstrecke wird das Band durch einen Ofen mit Argon als Inertgas geführt und dort bei 400 °C über eine Verweildauer von 30 sec gehalten. Das fertige Kupferband hat eine opalisierende Schicht, die im wesentlichen aus Titanoxid besteht. Die Weiterbearbeitung erfolgt wie im Beispiel 1.

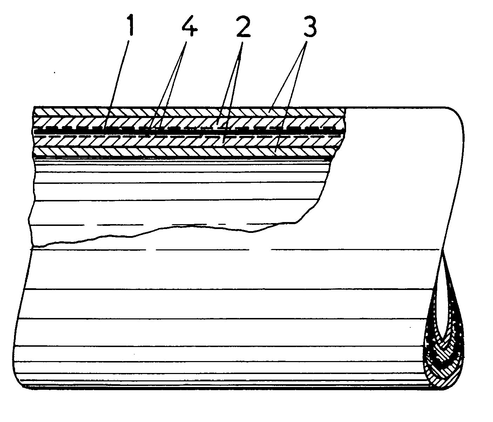

In der Zeichnung ist ein Teil eines erfindungsgemäßen Verbundrohres rein schematisch dargestellt.

Der Mantel des Rohres weist eine Mittelschicht 1 aus Kupfer und je eine Haftvermittlerschicht 2 sowie eine innere und äußere Deckschicht 3 auf. Die aus Kupfer bestehende Mittelschicht 1 ist innen und außen mit einem organischen, die lonenbildung bzw. -wanderung verhindernden Belag 4 (strichliert angedeutet) versehen, auf dem erst die Haftvermittlerschicht 2 und die Deckschichten 3 angeordnet sind.

## Patentansprüche

1. Verbundrohr, dessen Mantel eine Mittelschicht aus Kupfer und je eine Haftvermittlerschicht (2) und eine innere und äußere Deckschicht (3) aufweist, **dadurch gekennzeichnet, daß** die aus Kupfer bestehende Mittelschicht (1) innen und außen mit einem anorganischen, die lonenbildung bzw. -wanderung verhindernden Belag (4) versehen ist, auf dem erst die Haftvermittlerschichten (2) und die Deckschichten (4) angeorndet sind.

2. Verbundrohr nach Anspruch 1, **dadurch gekennzeichnet, daß** der Belag (4) galvanisch aufgebracht ist.

3. Verbundrohr nach Anspruch 1, **dadurch gekennzeichnet, daß** der Belag (4) durch Tauchen auf die Kupferschicht (1) aufgebracht ist.

4. Verbundrohr nach den Ansprüchen 1 und 2, **dadurch gekennzeichnet, daß** der Belag (4) aus einem Metall, vorzugsweise Ni, besteht.

5. Verbundrohr nach einem der Ansprüche 1 - 3, **dadurch gekennzeichnet, daß** der Belag (4) aus Oxiden der Metalle Ti und Zr besteht.

6. Verbundrohr nach einem der Ansprüche 1 - 5, **dadurch gekennzeichnet, daß** die Deckschichten (3) aus linearen oder verzweigten Polyolefinen, wie Polyäthylen, Polypropylen, Polybuten, vorzugsweise vernetzten Polyolefinen bestehen.

## Claims

1. Composite tube with a sleeve comprising a copper intermediate layer and respective bonding layers (2) and an inner and outer covering layer (3), **characterised in that** the copper intermediate layer (1) is provided internally and externally with an anorganic coating (4) preventing ion formation and ion migration, on which firstly the bonding layers (2) and the covering layers (3) are arranged.

2. Composite tube according to claim 1, **characterised in that** the coating (4) is galvanically applied.

3. Composite tube according to claim 1, **characterised in that** the coating (4) is applied to the copper layer (1) through immersion.

4. Composite tube according to claims 1 and 2, **characterised in that** the coating (4) consists of a metal, preferably Ni.

5. Composite tube according to one of the claims 1 to 3, **characterised in that** the coating (4) consists of oxides of the metals Ti and Zr.

6. Composite tube according to one of the claims 1 to 5, **characterised in that** the covering layers (3) consist of linear or branched polyolefins such as polyethylene, polypropylene, polybutene, preferably crosslinked polyolefins.

## Revendications

1. Tuyau composite, dont l'enveloppe présente une couche médiane en cuivre et, respectivement, une couche d'adhésion (2) et une couche de couverture intérieure et extérieure (3), **caractérisé en ce que** la couche médiane (1) formée de cuivre est munie, intérieurement et extérieurement, d'un revêtement (4) non organique, empêchant la formation ou la migration d'ions, revêtement sur lequel sont disposées ensuite les couches d'adhésion (2) et les couches de couverture (3).

2. Tuyau composite selon la revendication 1, **caractérisé en ce que** le revêtement (4) est appliqué par voie galvanique.

3. Tuyau composite selon la revendication 1, **caractérisé en ce que** le revêtement (4) est appliqué par immersion sur la couche de cuivre (1).

4. Tuyau composite selon les revendications 1 et 2, **caractérisé en ce que** le revêtement (4) est formé d'un métal, de préférence de Ni.

5. Tuyau composite selon l'une des revendications 1 à 3, **caractérisé en ce que** le revêtement (4) est formé d'oxydes des métaux Ti et Zr.

6. Tuyau composite selon l'une des revendications 1 à 5, **caractérisé en ce que** les couches de couverture (3) sont formées de polyoléfines linéaires ou ramifiées, telles que du polyéthylène, du polypropylène, du polybutène, de préférence des polyoléfines réticulées.
